# EUROPÄISCHE PATENTSCHRIFT

(11) **EP 2 699 769 B1**
(45) Veröffentlichungstag und Bekanntmachung des Hinweises auf die Patenterteilung: **27.04.2016**
(21) Anmeldenummer: 12728441.2
(22) Anmeldetag: 11.06.2012
(51) Int. Cl.: F01M 11/04, F01D 25/16, F01D 25/18, F02C 7/06, F16C 33/10

(54) **HYDRAULIKLAGER FÜR EINE STATIONÄRE GASTURBINE**
HYDRAULIC BEARING FOR A STATIONARY GAS TURBINE
DISPOSITIF D'APPUI HYDRAULIQUE POUR TURBINE À GAZ STATIONNAIRE

(30) Priorität: 06.07.2011 EP 11172856
(43) Veröffentlichungstag der Anmeldung: 26.02.2014
(73) Patentinhaber: Siemens Aktiengesellschaft, 80333 München (DE)
(72) Erfinder: LOHSE, Uwe, 42899 Remscheid (DE); PRADE, Bernd, 45479 Mülheim (DE)
(86) Internationale Anmeldenummer: PCT/EP2012/060970
(87) Internationale Veröffentlichungsnummer: WO 2013/004451

(56) Entgegenhaltungen:
- EP-A2- 1 544 417
- EP-A2- 1 873 357
- EP-A2- 1 923 541
- EP-A2- 2 163 733
- GB-A- 2 089 751
- US-A- 4 947 963

## Beschreibung

Die Erfindung betrifft ein Hydrauliklager für eine stationäre Gasturbine mit einer Ölwanne und mit einem Abfluss für Hydrauliköl.

Ein gattungsgemäßes Hydrauliklager für eine Gasturbine ist beispielsweise aus der WO 02/02913 A1 bekannt. Dieses Hydrauliklager soll bei engem Bauraum einen zuverlässigen Abfluss von Hydrauliköl gewährleisten. Dazu soll mit Hilfe einer schwimmenden Dichtung ein Differenzdruck zwischen zwei Strömen des Schmierfluids erzeugt werden, welcher den Abfluss des Schmieröls mit einer erhöhten Geschwindigkeit in die Abflussrohre ermöglicht.

Um einen kontinuierlichen Abfluss des Schmierfluids zu erreichen, ist aus der EP 2 163 733 A3 bekannt, das Schmierfluid tangential in das Abflussrohr einströmen zu lassen. Jedoch erfordert diese Konstruktion eine vergleichsweise massive Ölwanne, was als nachteilig angesehen wird.

Aufgabe der Erfindung ist die Bereitstellung eines alternativen Hydrauliklagers für eine stationäre Gasturbine, welches ebenfalls bei kompakter Bauweise und unabhängig vom Betriebszustand der Gasturbine und von inneren Lagerdrücken einen zuverlässigen Abfluss von Hydrauliköl eines Anhebe- und/oder Schmierölsystems stets gewährleistet.

Die der Erfindung zugrundeliegende Aufgabe wird mit einem Hydrauliklager gemäß den Merkmalen des Patentanspruchs 1 gelöst. Vorteilhafte Ausgestaltungen des Hydrauliklagers sind in den abhängigen Ansprüchen angegeben.

Erfindungsgemäß ist vorgesehen, dass ein gattungsgemäßes Hydrauliklager mit Mitteln ausgestattet ist, die bei abfließendem Hydrauliköl in der Abflussleitung eine Ringströmung mit zentraler Luftsäule hervorrufen. Mit anderen Worten: die Mittel bewirken, dass das Hydrauliköl mit Drall entlang der Wand der Abflussleitung strömt, so dass sich im Inneren der Abflussleitung eine zentrale Luftsäule ausbilden kann, die ein diskontinuierliches Abfließen und das Bilden von wiederkehrenden Ölpfropfen in der Abflussleitung zuverlässig verhindert. Hierdurch kann ein Luftaustausch zwischen der Ölwanne und der nachgeordneten Drainage des Hydrauliklagers erfolgen, was zuverlässig einen vom Betriebsdruck bzw. Lagerinnendruck der Gasturbine unabhängigen und kontinuierlichen Abfluss von Hydrauliköl mit größerer Geschwindigkeit gewährleistet. Üblicherweise ist dabei die Abflussleitung zumindest ölwannenseitig als zur Horizontalebene nahezu senkrechtes Fallrohr ausgebildet, so dass die auf das Hydrauliköl einwirkende Schwerkraft das Abfließen bewirkt. Eine Vergrößerung des Querschnitts der Abflussleitung ist aufgrund der Erfindung nicht erforderlich.

Gemäß einer ersten vorteilhaften Weiterbildung des Hydrauliklagers umfasst das Mittel um die Abflussöffnung herum angeordnete Leitelemente, die schräg zur Radialrichtung der Abflussöffnung angeordnet sind. Die Leitelemente behindern bzw. verhindern bestenfalls eine senkrecht auf die Abflussöffnung zuströmende Hydraulikölströmung. Sie erzwingen eine tangentiale Einströmung des Hydrauliköls in die Abflussöffnung und führen zu einer drallbehafteten Einströmung des Hydrauliköls nach Art eines Strudels. Die Leitelemente bilden mithin einen Drallkörper, der dem abfließenden Hydrauliköl die beschriebene tangentiale Geschwindigkeitskomponente aufprägt. Wegen der damit verbundenen Fliehkraft strömt das abfließende Hydrauliköl bevorzugt an der Wand der Abflussleitung, so dass sich in dessen Zentrum die zentrale Luftsäule für den Druckausgleich ausbilden kann. Die Luftsäule lässt somit das stoßweise Abfließen des Hydrauliköls nicht auftreten. Gleiches wird erreicht, wenn das Mittel alternativ versetzte Blockierungen umfasst.

Gemäß einer weiteren vorteilhaften Ausgestaltung sind die Leitelemente an einer Unterseite einer scheibenförmigen Platte befestigt. Dadurch sind die Leitelemente zueinander stets in identischer Weise ausgerichtet und gegen Relativverschiebungen gesichert. Ein zuverlässiger Dauerbetrieb ist damit gewährleistet. Die Leitelemente und die Platte sind dann Teile eines Einsatzes, der wannenseitig in bestehende Hydrauliklager eingesetzt werden kann. Dies erleichtert das Nachrüsten bestehender Hydrauliklager.

Besonders vorteilhaft ist die Ausgestaltung, bei der das Mittel ein sich in die Abflussleitung hinein erstreckendes, zur Abflussleitung koaxiales Rohr umfasst. Dieses Rohr bildet eine Hohlnabe, die immer eine Verbindung zwischen der Luft in einer Ölrücklaufleitung und der Luft in der Ölwanne herstellt. Auch dies verhindert die Bildung von wiederkehrenden Ölpfropfen und des damit einhergehenden diskontinuierlichen Abfließens in der bzw. durch die Abflussleitung.

Besonders bevorzugt ist die Ausgestaltung, bei der die scheibenförmige Platte eine zentrale Öffnung aufweist, von dem aus sich das Rohr in die Abflussleitung erstreckt. Der so gebildete Einsatz lässt sich auch einfach in bestehende Hydrauliklager nachrüsten.

Wenn die kreisförmige Abflussöffnung in einem ebenen Boden der Ölwanne angeordnet ist und die Abflussleitung sich von dort aus sich anfänglich nach unten erstreckt, kann ein kompaktes Hydrauliklager mit einem lokalen Sammelbereich angegeben werden.

Zweckmäßigerweise ist die Ölwanne Teil eines Lagerkörpers, welcher zur Aufnahme und Lagerung eines Rotors der Gasturbine dient. Besonders bevorzugt ist die Verwendung des Hydrauliklagers in einer stationären Gasturbine, bei der sich die Abflussleitung durch eine Lagerstrebe erstreckt.

Weitere Vorteile und Merkmale der Erfindung werden anhand der nachfolgenden Zeichnungen erläutert. Dabei zeigen:
- FIG 1: eine Gasturbine durch einen Längsteilquerschnitt,
- FIG 2: einen Ausschnitt aus dem Längsschnitt durch das Hydrauliklager der Gasturbine,
- FIG 3: schematisch einen Längsschnitt durch eine Ölwanne des Hydrauliklagers mit in eine Abflussöffnung eingesetzten Einsatz,
- FIG 4: den Querschnitt durch den Einsatz gemäß Schnittlinien IV-IV aus FIG 3 und
- FIG 5: den Querschnitt analog zu FIG 4, nur mit einer geänderten Anordnung von Leitelementen.

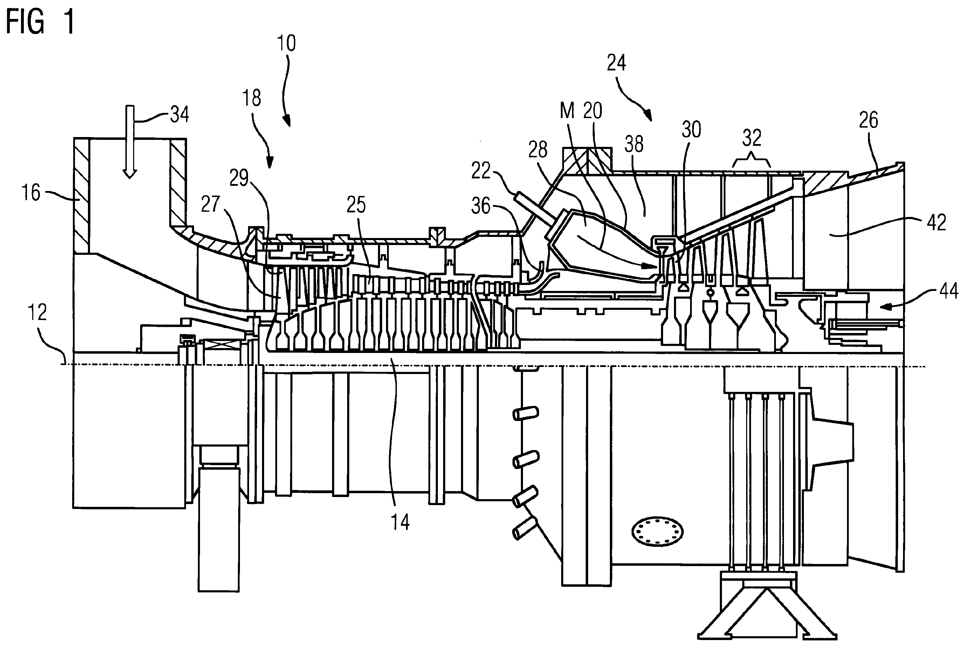

FIG 1 zeigt eine stationäre Gasturbine 10 in einem Längsteilschnitt. Die Gasturbine 10 weist im Innern einen um eine Rotationsachse 12 drehgelagerten Rotor 14 auf, der auch als Turbinenläufer bezeichnet wird. Entlang des Rotors 14 folgen aufeinander ein Ansauggehäuse 16, ein Axialturboverdichter 18, eine torusartige Ringbrennkammer 20 mit mehreren rotationssymmetrisch zueinander angeordneten Brennern 22, eine Turbineneinheit 24 und ein Abgasgehäuse 26. Anstelle mit einer Ringbrennkammer 20 kann die Gasturbine auch mit mehreren Rohrbrennkammern mit ein oder mehreren Brennern ausgestattet sein.

Der Axialturboverdichter 18 umfasst einen ringförmig ausgebildeten Verdichterkanal 25 mit darin kaskadisch aufeinanderfolgenden Verdichterstufen aus Laufschaufel- und Leitschaufelkränzen. Die am Rotor 14 angeordneten Laufschaufeln 27 liegen mit einer äußeren Kanalwand des Verdichterkanals 25 gegenüber. Der Verdichterkanal 25 mündet über einen Verdichterausgangsdiffusor 36 in einem Plenum 38. Darin ist die Brennkammer 20 mit ihrem Verbrennungsraum 28 vorgesehen, der mit einem ringförmigen Heißgaskanal 30 der Turbineneinheit 24 kommuniziert. In der Turbineneinheit 24 sind vier hintereinander geschaltete Turbinenstufen 32 angeordnet. Am Rotor 14 ist ein Generator oder eine Arbeitsmaschine (jeweils nicht dargestellt) angekoppelt. Die Anzahl der Turbinenstufen 32 ist jedoch für die Erfindung unerheblich.

Im Betrieb der Gasturbine 10 saugt der Axialturboverdichter 18 durch das Ansauggehäuse 16 als zu verdichtendes Medium Umgebungsluft 34 an und verdichtet diese. Die verdichtete Luft wird durch den Verdichterausgangsdiffusor 36 in das Plenum 38 geführt, von wo aus es in die Brenner 22 einströmt. Über die Brenner 22 gelangt auch Brennstoff in den Verbrennungsraum 28. Dort wird der Brennstoff unter Zugabe der verdichteten Luft zu einem Heißgas M verbrannt. Das Heißgas M strömt anschließend in den Heißgaskanal 30, wo es sich arbeitsleistend an den Turbinenschaufeln der Turbineneinheit 24 entspannt. Die währenddessen freigesetzte Energie wird vom Rotor 14 aufgenommen und einerseits zum Antrieb des Axialturboverdichters 18 und andererseits zum Antrieb einer Arbeitsmaschine oder elektrischen Generators genutzt.

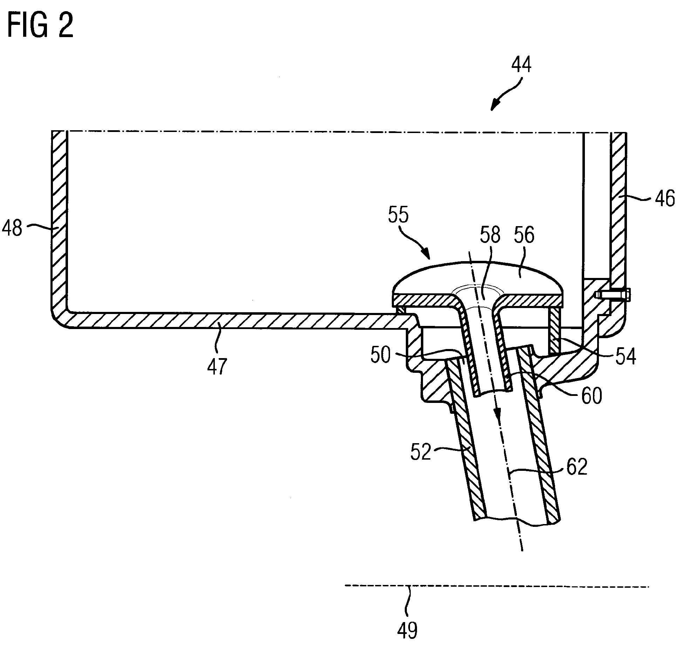

Der Rotor 14 der Gasturbine 10 ist an seinem turbinenseitigen Ende über mehrere entlang des Umfangs verteilte Lagerstreben 42 am Gehäuse 26 abgestützt. Dazu ist gemäß dem Ausführungsbeispiel ein Hydrauliklager 44 im Zentrum der Lagerstreben 42 angesiedelt. Das Hydrauliklager 44 ist als Radiallager mit entsprechenden Lagerschalen ausgestattet, in denen der Rotor 14 hydrodynamisch mit Hilfe des Hydrauliköls gleitgelagert ist. Die Lagerschalen sind im Innern eines Lagerkörpers 46 (FIG 2) angeordnet, wobei der Lagerkörper 46 in seinem - bezogen auf eine Horizontalebene 49 - unteren Bereich eine Ölwanne 48 bildet. Mit anderen Worten: die Ölwanne 48 ist Teil des Lagerkörpers 46.

In der Ölwanne 48 wird das zum Anheben des Rotors 14 und zur hydrodynamischen Lagerung des Rotors 14 während des Betriebs der Gasturbine 10 zwischen den Lagerschalen und einer Rotorlauffläche hineingepresste Hydrauliköl gesammelt. Dabei läuft das Hydrauliköl aufgrund der auf sie einwirkenden Gewichtskräfte in die Ölwanne 48. Im Boden 47 der Ölwanne 48 ist eine kreisförmige Abflussöffnung 50 angeordnet, an die eine vertikale - also zum Fundament hin führende - Abflussleitung 52 angeordnet ist. Im gezeigten Ausführungsbeispiel ist die Abflussleitung 52 gegenüber einer Radialrichtung der Gasturbine geringfügig geneigt angestellt und durchstreckt sich durch eine in der unteren Hälfte der Gasturbine 10 angeordneten Lagerstrebe 42 (nicht in FIG 2 gezeigt).

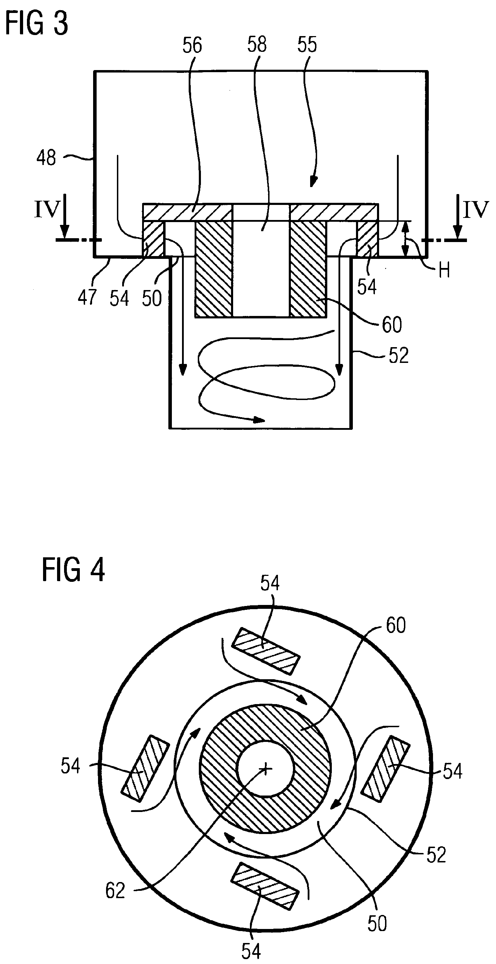

Um die Bildung von wiederkehrenden Ölpfropfen in der Abflussleitung 52 und dem damit einhergehenden unstetigen Ölablauf zu vermeiden, ist ein Einsatz 55 vorgesehen. Der Einsatz 55 ist in FIG 2 lediglich schematisch dargestellt und umfasst eine scheibenförmige Platte 56 mit einer zentralen Öffnung 58 und ein von der Öffnung wegführendes Rohr 60. Das Rohr 60 erstreckt sich nach unten bis in die Abflussleitung 52 hinein. Zudem umfasst der Einsatz 55 an der Unterseite der Platte 56 - also auf der der Abflussöffnung 50 zugewandten Seite der Platte 56 - über den Umfang der Abflussöffnung 50 gleichmäßig verteilte Stützen (FIG 4), die auf dem Wannenboden 47 aufsitzen. Auch der Einsatz 55 sowie dessen Bestandteile sind in FIG 2 lediglich im Längsschnitt dargestellt.

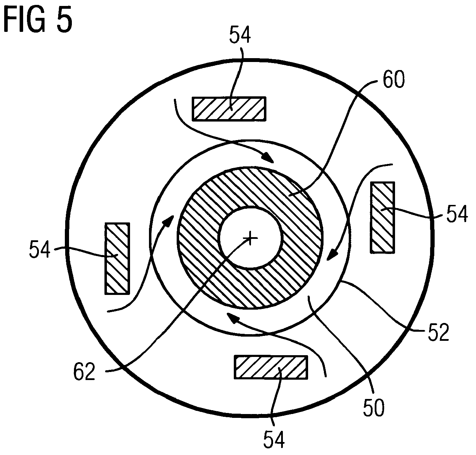

Der Aufbau der Ölwanne 48 mit dem am bzw. in der Abflussöffnung 50 angeordneten Einsatz 55 ist in FIG 3 schematisch dargestellt. Das zur Schmierung des Hydrauliklagers 44 eingesetzte Hydrauliköl muss nach dessen Verwendung zuverlässig aus dem Hydrauliklager 44 abgeführt werden. Um einen kontinuierlichen Abfluss von Hydrauliköl aus der Ölwanne 48 mit erhöhtem Durchsatz zu gewährleisten, sind mit Hilfe des Einsatzes 55 zwei dies bewirkende Mittel vorgesehen. Zum einen sind die Stützen als Leitelemente 54 ausgebildet. Sie verhindern, dass abfließendes Hydrauliköl hauptsächlich radial auf die kreisrunde Abflussöffnung 50 zuströmt. Die Leitelemente 54 leiten abfließendes Hydrauliköl tangential (FIG 4, FIG 5) in die Abflussöffnung 50 ein, so dass das Hydrauliköl danach in der Abflussleitung 52 mit Drall abfließt. Dies führt dazu, dass das Hydrauliköl sich an die Wand der Abflussleitung 52 anlegt. Aufgrund dessen kann sich im Zentrum 62 der Abflussleitung 52 eine zentrale Luftsäule ausbilden, die die Ölwanne 48 mit einer sich an die Abflussleitung 52 anschließende Drainage verbindet. Die Ausbildung einer zentralen Luftsäule wird zum anderen auch durch das Vorsehen des Rohrs 60 erreicht bzw. unterstützt. Auch dieses Mittel verhindert, dass sich im Zentrum der Abflussöffnung 50 eine die Abflussleitung 52 vollständig durchströmende Hydraulikölströmung einstellt, die ggf. zur Bildung von wiederkehrenden Ölpfropfen mit zeitweise geringerer Abflussmenge führt.

Die Leitelemente 54 gemäß der Ausgestaltung nach FIG 5 unterscheiden sich von den Leitelementen 54 gemäß der Ausgestaltung nach FIG 4 lediglich darin, dass diese nicht schräg, sondern parallel bzw. senkrecht zu kartesischen Koordinatenachsen und zugleich versetzt ausgerichtet sind. Auch mit derartigen Mitteln lässt sich eine ringförmige Abflussströmung mit einer tangentialen Strömungskomponente erreichen.

Die Leitelemente 54 weisen eine Höhe H auf, die größer ist als der in der Ölwanne 48 während des Betriebs maximal zu erwartende Ölstand. Dadurch ist gewährleistet, dass das Hydrauliköl nicht durch die zentrale, in der Platte 56 angeordnete Öffnung 58 einströmen und anschließend durch das Rohr 60 in die Abflussleitung 52 abfließen kann. Auch ist es möglich, dass das Rohr 60 weiter als dargestellt sich nach oben in den Raum erstrecken kann. Mit einem solchen, sich durch die Platte 56 hindurch erstreckendem Rohr wird das Abfließen des Hydrauliköls durch das Rohr besonders wirksam verhindert.

Gleichzeitig können die Leitelemente 54 auch als Streben ausgebildet sein, mit denen das koaxial zur Abflussleitung 52 angeordnete Rohr 60 über die ringförmige Platte 56 befestigt werden kann.

Insbesondere durch die gleichzeitige Verwendung der beiden Mittel zur Ausbildung einer Ringströmung aus Hydrauliköl mit einer zentralen Luftsäule in der Abflussleitung 52 eines Hydrauliklagers 44 wird besonders zuverlässig erreicht, dass unabhängig von dem Betriebszustand der Gasturbine 10 und unabhängig von Druckdifferenzen zwischen Lagerinnenraum und der Drainage des Ölsystems bei einem vertikalen Ölablauf der erforderliche Durchsatz an Hydrauliköl stets gewährleistet ist.

Insgesamt betrifft die Erfindung ein Hydrauliklager mit einer Ölwanne 48, in der ein Abfluss für Hydrauliköl vorgesehen ist, wobei der Abfluss eine in der Ölwanne 48 angeordnete Abflussöffnung 50 und eine sich an die Abflussöffnung 50 anschließende Abflussleitung 52 umfasst. Um einen zuverlässigen und allein durch die Gewichtskraft bewerkstelligten Abfluss von Hydrauliköl zu ermöglichen, sind Mittel vorgesehen, die in der Abflussleitung 52 Hydrauliköl als Ringströmung mit zentraler Luftsäule abfließen lassen.

## Patentansprüche

1. Hydrauliklager (44) für eine stationäre Gasturbine (10), mit einer Ölwanne (48), in der ein Abfluss für Hydrauliköl vorgesehen ist,
wobei der Abfluss eine in der Ölwanne (48) angeordnete Abflussöffnung (50) und eine sich an die Abflussöffnung (50) anschließende Abflussleitung (52) umfasst,
**dadurch gekennzeichnet,**
**dass** Mittel vorgesehen sind, die bei abfließendem Hydrauliköl in der Abflussleitung (52) eine Ringströmung mit zentraler Luftsäule bewirken.

2. Hydrauliklager (44) nach Anspruch 1,
bei der die Ringströmung eine tangentiale Strömungskomponente aufweist.

3. Hydrauliklager (44) nach Anspruch 1 oder 2,
bei der das Mittel um die Abflussöffnung (50) herum angeordnete Leitelemente (54) umfasst, die schräg zur Radialrichtung der Abflussöffnung (50) angeordnet sind.

4. Hydrauliklager (44) nach Anspruch 3,
bei dem die Leitelemente (54) an einer Unterseite einer scheibenförmigen Platte (56) angeordnet sind.

5. Hydrauliklager (44) nach Anspruch 1 oder 2,
bei der das Mittel alternativ versetzte Blockierungen umfasst.

6. Hydrauliklager (44) nach einem der vorangehenden Ansprüche,
bei dem das Mittel ein sich in die Abflussleitung (52) hineinstreckendes, zur Abflussleitung (52) koaxiales Rohr (60) umfasst.

7. Hydrauliklager (44) nach Anspruch 4 und 6,
bei dem die scheibenförmige Platte (56) eine zentrale Öffnung (58) aufweist, an dem sich das Rohr (60) anschließt.

8. Hydrauliklager (44) nach Anspruch 6 und 7,
bei dem das Rohr (60) sich durch die Platte (56) hindurch erstreckt.

9. Hydrauliklager (44) nach einem der Ansprüche 1 bis 8,
bei dem die Ölwanne (48) Teil eines Lagerkörpers ist, welcher zur Aufnahme und Lagerung eines Rotors (14) der Gasturbine (10) dient.

10. Hydrauliklager (44) nach einem der Ansprüche 1 bis 9
bei dem die Abflussöffnung (50) kreisförmig ausgestaltet und in einem Boden (47) der Ölwanne (48) angeordnet ist, wobei die sich an die Abflussöffnung (50) anschließende Abflussleitung (52) sich nach unten erstreckt.

11. Gasturbine (10) mit einem Hydrauliklager (44) nach einem der vorangehenden Ansprüche,
bei der der Abfluss sich durch eine Lagerstrebe (42) erstreckt.

## Claims

1. Hydraulic bearing (44) for a stationary gas turbine (10), with an oil pan (48) in which an outflow for hydraulic oil is provided, the outflow comprising an outflow port (50) arranged in the oil pan (48) and an outflow line (52) following the outflow port (50), **characterized in that** means are provided which, when hydraulic oil is flowing out, bring about an annular flow with a central air column in the outflow line (52).

2. Hydraulic bearing (44) according to Claim 1, in which the annular flow has a tangential flow component.

3. Hydraulic bearing (44) according to Claim 1 or 2, in which the means comprises guide elements (54) which are arranged around the outflow port (50) and which are arranged obliquely to the radial direction of the outflow port (50).

4. Hydraulic bearing (44) according to Claim 3, in which the guide elements (54) are arranged on an underside of a disk-shaped plate (56).

5. Hydraulic bearing (44) according to Claim 1 or 2, in which the means comprises alternately offset blocking devices.

6. Hydraulic bearing (44) according to one of the preceding claims, in which the means comprises a pipe (60) which extends into the outflow line (52) and which is coaxial to the outflow line (52).

7. Hydraulic bearing (44) according to Claims 4 and 6, in which the disk-shaped plate (56) has a central orifice (58) which is followed by the pipe (60).

8. Hydraulic bearing (44) according to Claims 6 and 7, in which the pipe (60) extends through the plate (56).

9. Hydraulic bearing (44) according to one of Claims 1 to 8, in which the oil pan (48) is part of a bearing body which serves for receiving and mounting a rotor (14) of the gas turbine (10).

10. Hydraulic bearing (44) according to one of Claims 1 to 9, in which the outflow port (50) is of circular configuration and is arranged in a bottom (47) of the oil pan (48), the outflow line (52) which follows the outflow port (50) extending downward.

11. Gas turbine (10) with a hydraulic bearing (44) according to one of the preceding claims, in which the outflow extends through a bearing strut (42).

## Revendications

1. Palier (44) hydraulique pour une turbine (10) à gaz fixe, comprenant une cuvette (48) à huile, dans laquelle est prévue une évacuation d'huile hydraulique,
dans lequel l'évacuation comprend une ouverture (50) d'évacuation disposée dans la cuvette (48) à huile et un conduit (52) d'évacuation se raccordant à l'ouverture (50) d'évacuation,
**caractérisé en ce qu'**il est prévu des moyens, qui, lorsque de l'huile hydraulique s'évacue dans le conduit (52) d'évacuation, donnent un écoulement annulaire ayant une colonne centrale d'air.

2. Palier (44) hydraulique suivant la revendication 1,
dans lequel l'écoulement annulaire a une composante d'écoulement tangentielle.

3. Palier (44) hydraulique suivant la revendication 1 ou 2,
dans lequel le moyen comprend des éléments (54) de conduite, qui sont disposés autour de l'ouverture (50) d'évacuation et qui sont inclinés par rapport à la direction radiale de l'ouverture (50) d'évacuation.

4. Palier (44) hydraulique suivant la revendication 3,
dans lequel les éléments (54) de conduite sont disposés sur une face inférieure d'une plaque (56) en forme de disque.

5. Palier (44) hydraulique suivant la revendication 1 ou 2,
dans lequel le moyen comprend des blocages décalés en alternance.

6. Palier (44) hydraulique suivant l'une des revendications précédentes,
dans lequel le moyen comprend un tube (60) coaxial au conduit (52) d'évacuation et s'étendant dans le conduit (52) d'évacuation.

7. Palier (44) hydraulique suivant les revendications 4 et 6,
dans lequel la plaque (56) en forme de disque a une ouverture (58) centrale, à laquelle se raccorde le tube (60).

8. Palier (44) hydraulique suivant les revendications 6 et 7, dans lequel le tube (60) traverse la plaque (56).

9. Palier (44) hydraulique suivant l'une des revendications 1 à 8,
dans lequel la cuvette (48) à huile fait partie d'un corps de palier, qui sert à recevoir et à monter un rotor (14) de la turbine (10) à gaz.

10. Palier (44) hydraulique suivant l'une des revendications 1 à 9,
dans lequel l'ouverture (50) d'évacuation est circulaire et est disposée dans un fond (47) de la cuvette (48) à huile, le conduit (52) d'évacuation se raccordant à l'ouverture (50) d'évacuation s'étendant vers le bas.

11. Turbine (10) à gaz ayant un palier (44) hydraulique suivant l'une des revendications précédentes,
dans laquelle l'évacuation passe dans une entretoise (42) de palier.
